# EUROPEAN PATENT SPECIFICATION

(11) **EP 3 076 567 B1**
(45) Date of publication and mention of the grant of the patent: **12.12.2018**
(21) Application number: 15290090.8
(22) Date of filing: 02.04.2015
(51) Int. Cl.: H04B 10/116, H04B 10/50, H04B 10/60, H04J 14/00, H04L 9/06, H04K 1/06, H04K 1/00, H04J 14/02

(54) **CODING AND ENCRYPTION FOR WAVELENGTH DIVISION MULTIPLEXING VISIBLE LIGHT COMMUNICATIONS**
CODIERUNG UND VERSCHLÜSSELUNG FÜR SICHTBARE WELLENLÄNGENTEILUNGS-MULTIPLEX-LICHTKOMMUNIKATION
CODAGE ET CRYPTAGE POUR MULTIPLEXAGE PAR RÉPARTITION EN LONGUEUR D'ONDE DES COMMUNICATIONS PAR LUMIÈRE VISIBLE

(43) Date of publication of application: 05.10.2016
(73) Proprietor: Alcatel Lucent, 91620 Nozay (FR)
(72) Inventor: Chen, Yejian, 70435 STUTTGART (DE)
(74) Representative: Nokia EPO representatives

(56) References cited:
- EP-A1- 2 136 484
- WO-A2-2011/103596
- US-A1- 2011 096 925
- US-A1- 2011 200 192
- TALHA A KHAN ET AL: "Visible light communication using wavelength division multiplexing for smart spaces", CONSUMER COMMUNICATIONS AND NETWORKING CONFERENCE (CCNC), 2012 IEEE, IEEE, 14 January 2012 (2012-01-14), pages 230-234, XP032160959, DOI: 10.1109/CCNC.2012.6181092 ISBN: 978-1-4577-2070-3

## Description

### Technical Field

This application relates to transmitters and receivers for transmitting multiple data streams via optical communication using wavelength division multiplexing (WDM), and to methods of transmitting and receiving multiple data streams via optical communication using WDM. The application particularly relates to transmission and reception of multiple data streams via visible light communication (VLC) using WDM.

### Background

VLC is growing area of wireless telecommunications and is recognized as a 5G technique. It does not require complicated infrastructure, and may be typically employed in Device-to-Device (D2D) communication, vehicle communication, and indoor/outdoor wireless communication.

In general, VLC is a rather secure communication concept, since the receiver is required to have Light-of-Sight (LoS) connection to the transmitter. Thus, also a potential eavesdropper would need to have a LoS connection to the transmitter and hence would in principle be visible to the transmitter. Nevertheless, in order to ensure detectability of the potential eavesdropper, VLC is typically employed in indoor broadcasting or in fields of application for which the transmitted signal or information is public, i.e. which have low security priority.

A technique for increasing security of VLC includes transmitting scrambled visible light signals between the transmitter and receiver instead of the original data, and to vary the scrambling sequence from time to time. In other words, the visible light signal is encrypted/decrypted in the time domain according to this technique. Nevertheless, the visible light signal may be received and stored by a potential eavesdropper, and the scrambling sequence and its generating algorithm might be determined subsequently.

According to another technique for increasing security of VLC, a secure space-time encryption and decryption mechanism is employed for Multiple Input Multiple Output (MIMO)-VLC, in which multiple LED transceivers are required to support MIMO-VLC. Here, the improved level of security due to encryption and decryption via on-off switching of the LEDs is attained at the price of a not fully used space-time resource.

Patent application publication No. WO 2011/103596 A2 discloses techniques, apparatus, and systems for optical WDM communications that involve dynamically modifying certain aspects of the WDM transmission (and corresponding receive) process at the optical (physical) layer to enhance data/network security. These techniques, apparatus and systems are stated to be compatible with encryption of underlying client signals.

Patent application publication No. US 2011/200192 A1 discloses an optical communications network incorporating photonic layer security, with secure key exchange without loss of data, and a method of operating the network. The network comprises a transmit side and a receive side. The transmit side includes first and second scramblers and a transmit side switch. The receive side includes first and second descramblers and a receive side switch. The scramblers use encryption keys to encrypt optical signals, and the descramblers use the encryption keys to decrypt the encrypted optical signals.

However, there is still a need for an improved technique for improving security of VLC.

### Summary

In view of this need, the present document proposes a method of transmitting multiple data streams via multiple optical transmission units adapted for optical communication using WDM, a method of receiving multiple data streams via multiple optical reception units adapted for optical communication using WDM, a transmission device for transmitting multiple data streams via multiple optical transmission units adapted for optical communication using WDM, and a reception device for receiving multiple data streams via multiple optical reception units adapted for optical communication using WDM, having the features of the respective independent claims. Preferred embodiments of the invention are described in the dependent claims.

An aspect of the disclosure relates to a method of transmitting multiple data streams via multiple optical transmission units adapted for optical communication using wavelength division multiplexing. Said optical communication may be visible light communication. Further, said optical communication may be free-space optical communication. Transmission may be performed at mutually different wavelengths. The method comprises a first encryption step of encrypting each of a plurality of data streams to obtain a respective encrypted data stream. The first encryption step may involve scrambling each of the plurality of data streams, or encrypting each of the plurality of data streams by using an encryption algorithm. The method further comprises a (symbol) mapping step of mapping the plurality of encrypted data streams obtained in the first encryption step to a plurality of transmission streams for transmission via the optical transmission units. The transmission streams and optical transmission units are in a one-to-one relationship, i.e. for each transmission stream there is a corresponding optical transmission unit. Each transmission stream is mapped to by at least two of the plurality of encrypted data streams, i.e. receives contributions from at least two of the plurality of encrypted data streams. The method further comprises a second encryption step of encrypting each of the plurality of transmission streams to obtain a respective encrypted transmission stream. The second encryption step may involve scrambling each of the plurality of transmission streams, or encrypting each of the plurality of transmission streams by using an encryption algorithm. The method further comprises a transmission step of transmitting each of the plurality of encrypted transmission streams obtained in the second encryption step via a respective optical transmission unit. The optical transmission units may be LEDs. The multiple LEDs (e.g. colored LEDs) may transmit (emit) light at mutually different wavelengths. The method may yet further comprise an encoding step, before the first encryption step, of encoding a plurality of input data streams for optical transmission.

The data streams, encrypted data streams, transmissions streams and encrypted transmissions stream defined in the present disclosure may be collectively referred to as streams of symbols, or symbols streams. Throughout the present disclosure, scrambling of a stream of symbols may be understood to relate to (inter)changing positions of symbols within the stream of symbols, or to introducing phase shifts, e.g. (pseudo-)random phase shifts, to the symbols of the stream of symbols. Likewise, un-scrambling of a stream of symbols may be understood to relate to (inter)changing positions of symbols within the stream on symbols to reverse the effect of the scrambling, or to introducing appropriate phase shifts to the symbols of the stream of symbols to compensate for any phases introduced during the scrambling. Further, encryption algorithms and decryption algorithms referred to in the present disclosure may relate e.g. to symmetrical encryption/decryption algorithms, such as algorithms according to the Data Encryption Standard (DES) or Advanced Encryption Standard (AES), for example, or to asymmetrical encryption/decryption algorithms, such as the Rivest-Shamir-Adleman (RSA) algorithm or the Pretty Good Privacy (PGP) algorithm, for example. However, the present disclosure is not limited to these examples of encryption/decryption algorithms, and any suitable encryption/decryption algorithm may be used.

Recently, it has been recognized that WDM can be jointly embedded in an optical communication system, such as a VLC system, by using the inherent frequency gap of colored LEDs to enable simultaneous transmission of multiple optical signals. Configured as above, the transmission method provides for an enhanced transmission bandwidth by virtue of WDM, and further provides for a significantly enhanced level of security compared to conventional optical communication. Successfully recovering the transmitted data requires knowledge of all three of the first and second encryptions schemes and the mapping scheme. In this sense, the mapping step may be understood to present a third encryption layer. While performing the combination of encryption steps and the mapping step proposed above does not unduly increase computational burden on the transmitter or a legitimate receiver, computational burden for illegitimately recovering the transmitted data by a potential eavesdropper is drastically increased. In other word, the above combination of encryption and mapping steps allows to protect the transmitted data against eavesdropping by non-authorized third parties, and at the same time to fully exploit the diversity of different WDM channels. In addition, a signal-to-noise ratio (SNR) of optical transmission may be improved by the proposed combination of encryption and mapping steps.

In embodiments, the plurality of data streams may be encrypted individually in the first encryption step, using a distinct encryption scheme (e.g. scrambling sequence, or encryption key) for each data stream. Thus, if the plurality of data streams corresponds to a plurality of different users, confidentiality of information among the plurality of users is achieved in a simple manner.

In embodiments, each transmission stream may be obtained as an interleaved sequence of data portions of at least two of the plurality of encrypted data streams in the mapping step. In other words, each transmission stream may be (virtually) divided into a plurality of sequential slots (e.g. blocks) in the time domain, and for each of these slots, a data portion (e.g. block) of one of the plurality of encrypted data streams may be selected for providing the content of the respective slot. This mapping may be performed in accordance with a predetermined mapping scheme. This predetermined mapping scheme may be shared with a receiver side. Further, the predetermined mapping scheme may be varied over time. Since the mapping relates to scrambling of symbols or blocks of symbols in the frequency domain, it may be understood to provide another layer of encryption in addition to the first and second encryption steps.

In embodiments, each of the plurality of encrypted data streams may be mapped to each of the plurality of transmission streams in the mapping step. Further, the number of (encrypted) data streams may be equal to the number of transmission streams, and hence equal to the number of optical transmission units. In other words, the mapping may be diagonal mapping. Thus, each transmission stream may comprise a data portion of each encrypted data stream, and each transmission stream may be obtained as an interleaved sequence of data portions of each of the plurality of encrypted data streams. Thereby, diversity of WDM channels can be exploited in an optimal manner.

Another aspect of the disclosure relates to a method of receiving multiple encrypted transmission streams via multiple optical reception units adapted for optical communication using wavelength division multiplexing. Said optical communication may be visible light communication. Further, said optical communication may be free-space optical communication. Reception may be performed at mutually different wavelengths. The method comprises a reception step of receiving a plurality of encrypted transmission streams at a plurality of optical reception units. The received encrypted transmission streams and the optical reception units are in a one-to-one relationship, i.e. for each encrypted transmission stream there is a corresponding optical reception unit. The optical reception units may be photodetectors. The multiple photodetectors may be sensitive to light of mutually different wavelengths. The method comprises a first decryption step of decrypting each of the plurality of encrypted transmission streams to obtain a respective transmission stream. The first decryption step may be the inverse of the second encryption step of the method for transmitting multiple data streams according to the preceding aspect. The first decryption step may involve un-scrambling each of the plurality of encrypted transmission streams or decrypting each of the plurality of encrypted transmission streams by using a decryption algorithm. The method comprises a mapping step of mapping the plurality of transmission streams obtained in the first decryption step to a plurality of encrypted data streams. Each transmission stream is mapped to at least two of the plurality of encrypted data streams. The mapping step may be the inverse of the mapping step of the method for transmitting multiple data streams according to the preceding aspect. The method comprises a second decryption step of decrypting each of the plurality of encrypted data streams to obtain a respective data stream. The second decryption step may be the inverse of the first encryption step of the method for transmitting multiple data streams according to the preceding aspect. The second decryption step may involve un-scrambling each of the plurality of encrypted data streams or decrypting each of the plurality of encrypted data streams by using a decryption algorithm. The method may further comprise a decoding step, after the second decryption step, of decoding each of the plurality of data streams obtained in the second decryption step to obtain a respective decoded data stream. The method may yet further comprise an outputting step of outputting the plurality of decoded data streams obtained in the decoding step, or the plurality of data streams obtained in the second decoding step, to one or more users.

In embodiments, the plurality of encrypted data streams may be decrypted individually in the second decryption step, using a distinct decryption scheme for each encrypted data stream. Each distinct decryption scheme (e.g. scrambling sequence or decryption key) may correspond to a respective encryption scheme used for obtaining the respective encrypted data stream at a transmitter side.

In embodiments, each encrypted data stream may be obtained as an interleaved sequence of data portions of the plurality of transmission streams in the mapping step, such that for each transmission stream at least two of the plurality of encrypted data streams contain a data portion of the respective transmission stream. In other words, each transmission stream may be divided into a plurality of sequential slots (e.g. blocks) in the time domain in accordance with a division of the respective transmission stream at the transmitter side, and for each of these slots, one of the plurality of encrypted data streams may be selected for receiving the content of the respective slot. Each of the plurality of encrypted data streams may be mapped to by each of the plurality of transmission streams. Further, the number of (encrypted) data streams may be equal to the number of transmission streams, and hence equal to the number of optical reception units. In other words, the mapping may be diagonal mapping. Thus, each encrypted data stream may comprise a data portion of each transmission stream, and each encrypted data stream may be obtained as an interleaved sequence of data portions of each of the plurality of transmission streams. This mapping may be performed in accordance with a predetermined mapping scheme, which may be the inverse of a mapping scheme used at the transmitter side. In other words, the predetermined mapping scheme may be shared between the transmitter side and the receiver side.

Another aspect of the disclosure relates to a transmission device for transmitting multiple data streams via multiple optical transmission units adapted for optical communication using wavelength division multiplexing. Said optical communication may be visible light communication. Further, said optical communication may be free-space optical communication. Transmission may be performed at mutually different wavelengths. The transmission device comprises a first encryption unit for encrypting each of a plurality of data streams to obtain a respective encrypted data stream. The first encryption unit may be configured to perform scrambling of each of the plurality of data streams or encrypting each of the plurality of data streams by using an encryption algorithm. The transmission device further comprises a mapping unit for mapping the plurality of encrypted data streams obtained by the first encryption unit to a plurality of transmission streams for transmission via the optical transmission units. The transmission streams and optical transmission units are in a one-to-one relationship, i.e. for each transmission stream there is a corresponding optical transmission unit. Each transmission stream is mapped to by at least two of the plurality of encrypted data streams, i.e. receives contributions from at least two of the plurality of encrypted data streams. The transmission device further comprises a second encryption unit for encrypting each of the plurality of transmission streams to obtain a respective encrypted transmission stream. The second encryption unit may be configured to perform scrambling of each of the plurality of transmission streams or encrypting each of the plurality of transmission streams by using an encryption algorithm. The transmission device further comprises a transmission unit for transmitting each of the plurality of encrypted transmission streams obtained by the second encryption unit. The transmission unit comprises the multiple optical transmission units. Each encrypted transmission stream is transmitted via a respective optical transmission unit. The optical transmission units may be LEDs (optical diodes). The multiple LEDs may transmit (emit) light at mutually different wavelengths. The transmission device may yet further comprise an encoding unit for encoding a plurality of input data streams for optical transmission.

In embodiments, the first encryption unit may be configured to encrypt the plurality of data streams individually, using a distinct encryption scheme (e.g. scrambling sequence or encryption key) for each data stream.

In embodiments, the mapping unit may be configured to generate each transmission stream by sequentially interleaving data portions of at least two of the encrypted data streams. In other words, each transmission stream may be (virtually) divided into a plurality of sequential slots (e.g. blocks) in the time domain, and for each of these slots, a data portion (e.g. block) of one of the plurality of encrypted data streams may be selected for providing the content of the respective slot. This mapping may be performed in accordance with a predetermined mapping scheme. This predetermined mapping scheme may be shared with a receiver side. In embodiments, the mapping unit may be configured to map each of the plurality of encrypted data streams to each of the plurality of transmission streams. Further, the number of (encrypted) data streams may be equal to the number of transmission streams, and hence equal to the number of optical transmission units. In other words, the mapping may be diagonal mapping. Thus, each transmission stream may comprise a data portion of each encrypted data stream, and each transmission stream may be obtained as an interleaved sequence of data portions of each of the plurality of encrypted data streams.

In embodiments, the transmission device may further comprise one or more connection ports for connecting one or more user devices. Each of these user devices may be configured to input one or more (input) data streams to the transmission device.

Another aspect of the disclosure relates to a reception device for receiving multiple encrypted transmission streams via a plurality of optical reception units adapted for optical communication using wavelength division multiplexing. Said optical communication may be visible light communication. Further, said optical communication may be free-space optical communication. Reception may be performed at mutually different wavelengths. The reception device comprises a reception unit for receiving a plurality of encrypted transmission streams. The reception unit comprises the plurality of optical reception units, and reception is performed at the plurality of optical reception units. The optical reception units may be photodetectors. The multiple photodetectors may be sensitive to light of mutually different wavelengths. The encrypted transmission streams and the optical reception units are in a one-to-one relationship, i.e. for each encrypted transmission stream there is a corresponding optical reception unit. The reception device further comprises a first decryption unit for decrypting each of the plurality of encrypted transmission streams to obtain a respective transmission stream. The first decryption unit may be configured to perform decryption in an inverse relationship to encryption performed by the second encryption unit of the transmission device according to the preceding aspect. The first decryption unit may be configured to perform un-scrambling of each of the plurality of encrypted transmission streams or decrypting each of the plurality of encrypted transmission streams by using a decryption algorithm. The reception device further comprises a mapping unit for mapping the plurality of transmission streams obtained by the first decryption unit to a plurality of encrypted data streams. Each encrypted data stream is mapped to by at least two of the plurality of transmission streams. The mapping unit may be configured to perform mapping in an inverse relationship to the mapping performed by the mapping unit of the transmission device according to the preceding aspect. The reception device further comprises a second decryption unit for decrypting each of the plurality of encrypted data streams to obtain a respective data stream. The second decryption unit may be configured to perform decryption in an inverse relationship to encryption performed by the first encryption unit of the transmission device according to the preceding aspect. The second decryption unit may be configured-to perform un-scrambling of each of the plurality of encrypted data streams or decrypting each of the plurality of encrypted data streams by using a decryption algorithm. The reception device may further comprise a decoding unit for decoding each of the plurality of data streams obtained by the second decryption unit to obtain a respective decoded data stream. The reception device may yet further comprise an output unit for outputting the plurality of decoded data streams obtained by the decoding unit, or the plurality of data streams obtained by the second decoding unit, to one or more users.

In embodiments, the second decryption unit may be configured to decrypt the plurality of encrypted data streams individually, using a distinct decryption scheme for each encrypted data stream.

In embodiments, the mapping unit may be configured to generate each encrypted data stream by sequentially interleaving data portions of the transmission streams, such that for each transmission stream at least two of the plurality of encrypted data streams contain a data portion of the respective transmission stream. In other words, each transmission stream may be divided into a plurality of sequential slots (e.g. blocks) in the time domain in accordance with a division of the respective transmission stream at the transmitter side, and for each of these slots, one of the plurality of encrypted data streams may be selected for receiving the content of the respective slot. Each of the plurality of encrypted data streams may be mapped to by each of the plurality of transmission streams, i.e. each of the plurality of encrypted data streams may receive a contribution from each of the plurality of transmission streams. Further, the number of (encrypted) data streams may be equal to the number of transmission streams, and hence equal to the number of optical reception units. In other words, the mapping may be diagonal mapping. Thus, each encrypted data stream may comprise a data portion of each transmission stream, and each encrypted data stream may be obtained as an interleaved sequence of data portions of each of the plurality of transmission streams. This mapping may be performed in accordance with a predetermined mapping scheme, which may be the inverse of a mapping scheme used at the transmitter side. In other words, the predetermined mapping scheme may be shared between the transmitter side and the receiver side.

In embodiments, each optical reception unit may comprise a photodetector and an optical filter. The optical filter may be arranged such that light interacting with the photodetector must have passed through the optical filter. The optical filters of the plurality of optical reception units may have mutually different pass bands.

In embodiments, the reception device may further comprise one or more connection ports for connecting one or more user devices. Each of these user devices may be configured to receive one or more data streams from the reception device.

Another aspect of the disclosure relates to an apparatus comprising the transmission device and the reception device according to the two preceding aspects.

It will be appreciated that method steps and apparatus features may be interchanged in many ways. In particular, the details of the disclosed apparatus can be implemented as a method, and vice versa, as the skilled person will appreciate.

### Brief Description of the Figures

Embodiments of the disclosure are explained below in an exemplary manner with reference to the accompanying drawings, wherein
**Fig. 1** schematically illustrates an example of a VLC system to which embodiments of the disclosure may be applied,
**Fig. 2A** schematically illustrate a conventional mapping scheme,
**Fig. 2B** schematically illustrates an example of a mapping scheme that may be employed in embodiments of the disclosure,
**Fig. 3** is a flow chart schematically illustrating an example of a transmission method according to embodiments of the disclosure,
**Fig. 4A** and **Fig. 4B** schematically illustrate examples of transmission devices according to embodiments of the disclosure,
**Fig. 5** is a flow chart schematically illustrating an example of a reception method according to embodiments of the disclosure,
**Fig. 6** schematically illustrates an example of an integrated device for transmission and reception according to embodiments of the disclosure, and
**Fig. 7** schematically illustrates an example of a reception device according to embodiments of the disclosure.

### Detailed Description

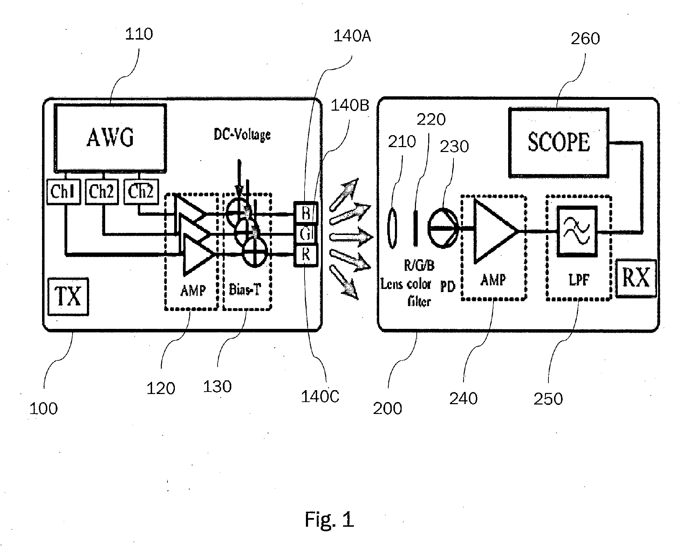

It has been found that WDM can be jointly embedded in a VLC system by using inherent frequency gaps of colored LEDs to enable simultaneous transmission of multiple signals. Fig. 1 schematically illustrates examples of a transmitter (e.g. a VLC transmitter) 100 and a receiver (e.g. a VLC receiver) 200 employing WDM.

In the transmitter 100, a plurality of data streams are generated. This proceeds e.g. via an Arbitrary Waveform Generator (AWG) 110 outputting a plurality of signals. The plurality of signals may be (individually) amplified by an amplifier 120 comprising an amplification stage for each signal. The plurality of amplified signals may then be input to a bias unit 130 which impresses each signal in accordance with data to be transmitted, thereby generating the plurality of data streams. The data streams may be encoded for optical transmission by an encoder unit (not shown in the figure). The (encoded) data streams may be transmitted via optical transmission units 140A, 140B, 140C. The optical transmission units 140A, 140B, 140C may be LEDs (optical diodes) that emit light at mutually different wavelengths.

The receiver 200 may comprise a lens 210, a plurality of optical filters (color filters) 220, a plurality of photodetectors 230, an amplifier 240, a filter (e.g. a low pass filter) 250, and a decoding unit 260. The optical filters 220 may have mutually different pass bands, i.e. each optical filter may allow passage of a distinct wavelength or range of wavelengths, while blocking all other wavelengths. Each optical filter 220 may be arranged in conjunction with a corresponding photodetector 230. After focusing be the lens 210, the received optical signals may be optically filtered by the optical filters 220 and converted into electrical signals at corresponding photodetectors 230. After filtering at the filter 250, decoding may be performed in the decoding unit 260.

Using the optical communication system of **Fig. 1****,** the data throughput is enhanced by a factor corresponding to the number of data streams (e.g. three in the illustrated example). In order to avoid interference of spatially adjacent channels, and in order to enhance security, Forward Error Correction (FEC) and encryption schemes may be employed. The former aids the target user (receiver) to recover the signal successfully, and the latter prevents eavesdropping by third parties.

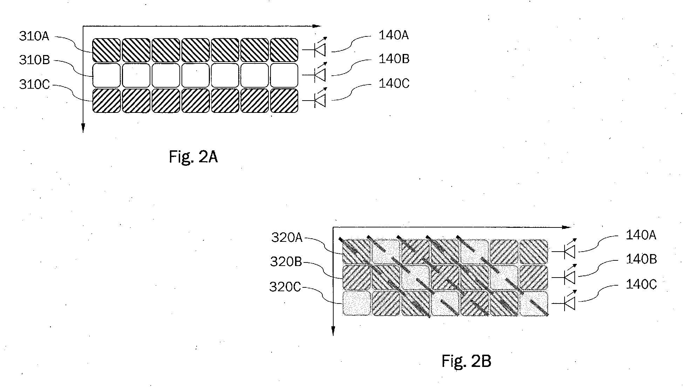

**Fig. 2A** schematically illustrates a conventional mapping scheme. This scheme corresponds to horizontal mapping, as described e.g. in T. A. Khan et al., "Visible Light Communication using Wavelength Division Multiplexing for Smart Spaces", in Proceedings of the 9th Annual IEEE Consumer Communications and Networking Conference (CCNC'12), Jan. 2012. For example, three (7,4)- Bose-Chaudhuri-Hocquenghem (BCH)-Codes 310A, 310B, 310C (data streams) may be independently transmitted via Red (R), Green (G), and Blue (B) channels, using optical transmission units 140A, 140B, 140C. In the figure, the horizontal axis represents time, and the vertical axis indicates wavelength or frequency of emitted light.

**Fig. 2B** schematically illustrates an example of a mapping scheme that may be employed in embodiments of the disclosure.

A plurality of data streams may be individually encoded for optical transmission, e.g. as (7,4)-BCH-Codes. Any suitable encoding scheme may be used at this stage. Further, depending on the data streams that are received as an input, encoding may not be required. Each data stream may be obtained from an individual user of a multi-user WDM-VLC system, or all data streams may be obtained from a single user. Also combinations of these two extremal cases are possible.

The plurality of (encoded) data streams may be subjected to (first) encryption, e.g. by scrambling of symbols in the (encoded) data streams or by encrypting the (encoded) data streams using an appropriate encryption algorithm. Scrambling is understood to involve interchanging positions of symbols in a respective stream, or introducing phase shifts into a respective stream, e.g. according to a scrambling sequence generated by a generating algorithm. The symbol positions may be changed in a (pseudo-)random manner, and the phase shifts may be pseudo-random phase shifts. The scrambling sequence (scrambling scheme, encryption algorithm, or encryption scheme in general) may be varied with time. Likewise, an encryption key may be varied with time. The data streams may be encrypted individually, i.e. each data stream may be encrypted according to a distinct encryption scheme (e.g. scrambling scheme, or encryption scheme in general). These encryption schemes may be confidential to both internal users (i.e. users providing the data streams) and external users.

After encryption, the encrypted data streams may be subjected to WDM, i.e. the encrypted data streams may be mapped to a plurality of data streams. For each optical transmission unit, there may be a corresponding transmission stream. That is, the numbers of optical transmission units and transmission streams may be equal, and the optical transmission units and transmission streams may be in a one-to-one relationship. The mapping may proceed according to a predetermined mapping scheme. Successful transmission (decoding) may require that the mapping scheme is known to the receiver side. In the mapping, each transmission stream may be obtained as an interleaved sequence of data portions of encrypted data streams (e.g. of at least two encrypted data streams). To this end, each transmission stream may be (virtually) divided into a plurality of sequential slots (e.g. corresponding to blocks) in the time domain. For each of these slots, a data portion (e.g. block) of one of the plurality of encrypted data streams may be selected for providing the content of the respective slot. Each slot or block may comprise a predetermined number of symbols. Put differently, blocks of the encrypted data streams may be distributed to the transmission streams. To avoid trivial mapping, each transmission stream may be mapped to by at least two encrypted data streams, i.e. each transmission stream may comprise contributions (data portions, e.g. blocks) from at least two different encrypted data streams. To ensure optimal utilization of time-frequency resources, the number of (encrypted) data streams may be equal to the number of transmission streams, and hence the number of (encrypted) data streams may be equal to the number of optical transmission units.

In general, for N encrypted data streams and N transmission streams, an m-th block of an n-th transmission stream corresponds to an m-th block of an encrypted data stream the number of which is given by a function F(n,m) which implements the mapping scheme. Said function may be known to the receiver side. The mapping scheme may be varied with time. Further, the mapping scheme may be said to present another layer of security (i.e. encryption).

A particular mapping scheme that may be employed in embodiments of the disclosure is diagonal mapping. However, the present disclosure is not to be understood to be limited to diagonal mapping. In diagonal mapping, each of the plurality of encrypted data streams may be mapped to each of the plurality of transmission streams in the mapping step. Since each encrypted data stream is mapped to each transmission stream, each transmission stream comprises contributions (data portions, e.g. blocks) of each encrypted data stream. Thus, each transmission stream may be obtained as an interleaved sequence of data portions of each of the plurality of encrypted data streams.

In more detail, in diagonal mapping a first block of a first transmission stream may correspond to a first block of a first encrypted data stream, a second block of the first transmission stream may correspond to a second block of a second encrypted data stream, and so forth. Further, a second block of the second transmission stream may correspond to a second block of the first encrypted data stream, a third block of the second transmission stream may correspond to a third block of the second encrypted data stream, and so forth. In other words, if diagonal mapping is employed, each transmission stream may be mapped to by each encrypted data stream in a cyclical manner. In general, for N encrypted data streams and N transmission streams, an m-th block of an n-th transmission stream corresponds to an m-th block of an (((n + m + 1) mod N) + 1)-th encrypted data stream.

When employing diagonal mapping, each data stream will be transmitted by each optical transmission unit, i.e. there are a plurality (three in the example of Fig. 2B) of independent channel realizations.

While mapping according to the present disclosure has been explained with reference to encrypted data streams and transmission streams, it is understood that the above description generalizes to any kind of input streams and any kind of output streams.

Subsequent to mapping, each transmission stream may be subjected to (second) encryption. Unless indicated otherwise, encryption at this stage may proceed as described above for encryption of the (encoded) data streams. The encryptions scheme (e.g. scrambling sequence or encryption key) may be varied with time. The transmission streams may be encrypted individually, i.e. transmission stream may be encrypted according to a distinct encryption scheme (e.g. scrambling sequence). The encryption schemes may be confidential to external users, but may be known to internal users (i.e. users providing the data streams).

As indicated above, it is the purpose of the first encryption to protect each individual user in the multi-user WDM-VLC system from eavesdropping, i.e. from eavesdropping by other internal users, and also from eavesdropping by third parties (external eavesdropping). Thus, (first) encryption information (encryption scheme, e.g. scrambling scheme or a key for encryption/decryption) may not be shared among the internal users of the multi-user WDM-VLC system. Further, it is the purpose of the second encryption to protect the internal users against external eavesdropping. Accordingly, (second) encryption information (encryption scheme, e.g. scrambling scheme or a key for encryption/decryption) may be shared among the internal users of the multi-user WDM-VLC system.

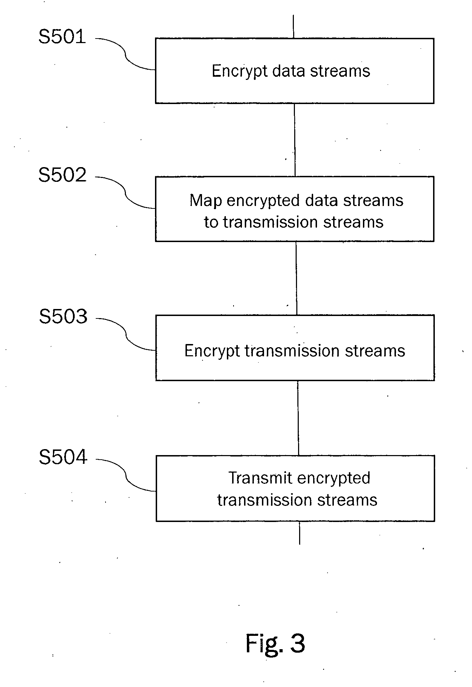

**Fig. 3** is a flow chart schematically illustrating an example of a transmission method according to embodiments of the disclosure.

At step S501, which is a first encryption step, the plurality of data streams may be encrypted, as described with reference to **Fig. 2B** above. Encrypting the plurality of data streams may involve scrambling (symbols of) each of the plurality of data streams or encrypting each of the plurality of data streams using a suitable encryption algorithm. Each data stream may be encrypted using a unique (i.e. data stream specific) encryption scheme (e.g. scrambling scheme, or key). As an outcome of this step, a plurality of encrypted data streams are obtained.

Optionally, prior to step S501, an encoding step of encoding each of a plurality of data streams for optical transmission may be provided (not shown in **Fig. 3**).

At step S502, which is a mapping step, the encrypted data streams obtained at step S501 may be mapped to a plurality of transmission streams, as described with reference to Fig. 2B above. The number of transmission streams may be equal to the number of optical transmission units and to the number of encrypted data streams. Each transmission stream may be mapped to by at least two encrypted data streams. If diagonal mapping is employed, each transmission stream may be mapped to by each encrypted data stream, in a cyclical manner. As an outcome of this step, a plurality of transmission streams are obtained.

At step S503, which is a second encryption step, each of the plurality of transmission streams may be encrypted, as described with reference to Fig. 2B above. Encrypting the plurality of transmission streams may involve scrambling (symbols of) each of the plurality of transmission streams or encrypting each of the plurality of transmissions streams using a suitable encryption algorithm. Each transmission stream may be encrypted using a unique (i.e. transmission stream specific) encryption scheme (e.g. scrambling scheme, or key). As an outcome of this step, a plurality of encrypted transmission streams are obtained.

At step S504, which is a transmission step, each of the plurality of encrypted transmission streams obtained at step S503 may be transmitted via a corresponding optical transmission unit. Each transmission stream may be transmitted as a corresponding optical signal. The optical transmission units may be colored LEDs (optical diodes) that emit light at mutually different wavelengths, such as red, green and blue LEDs, for example. Thus, each transmissions stream may be transmitted as a corresponding optical signal of a specific wavelength.

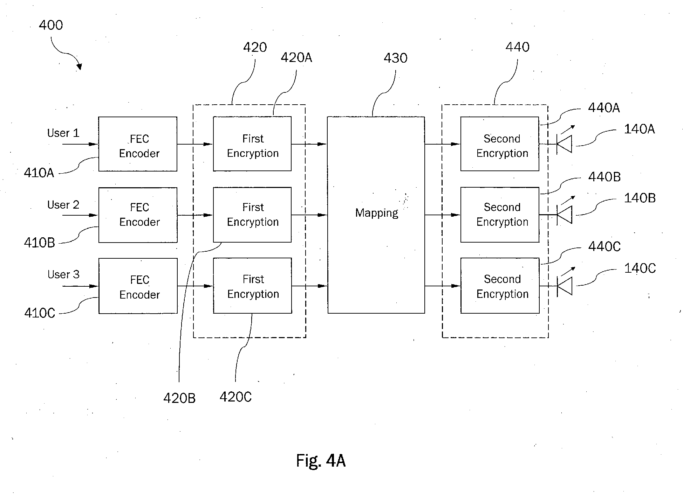

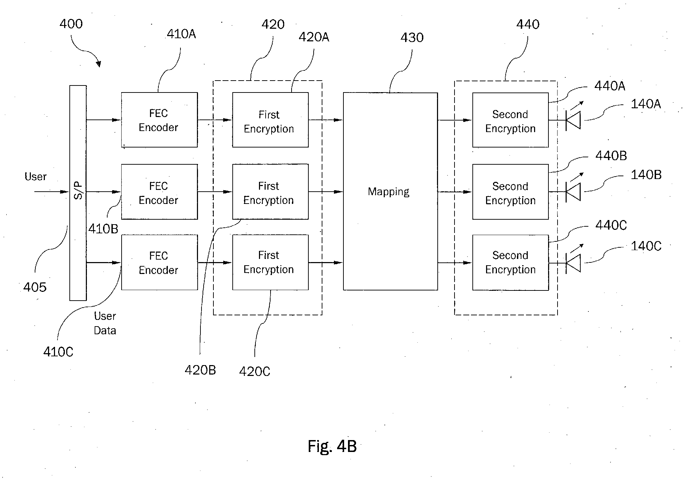

**Fig. 4A** and **Fig. 4B** schematically illustrate examples of transmission devices 400 according to embodiments of the disclosure. **Fig. 4A** relates to a multi-user case in which each user provides a data stream and **Fig. 4B** relates to a single-user case in which a single user provides a plurality of data streams, in order to profit from increased bandwidth for transmission.

A plurality of data streams e.g. provided by a plurality of individual users may be input to the transmission device 400 of **Fig. 4A****.** The transmission device 400 may comprise a plurality of encoding units (e.g. FEC encoders) 410A, 410B, 410C, a first encryption unit 420, a mapping unit 430, a second encryption unit 440, and a plurality of optical transmission units 140A, 140B, 140C. The first encryption unit 420 may comprise a plurality of first encryption sub-units 420A, 420B, 420C, e.g. one first encryption sub-unit for each data stream. The second encryption unit 440 may comprise a plurality of second encryption sub-units 440A, 440B, 440C, e.g. one second encryption sub-unit for each transmission stream.

Each of the encoding units 410A, 410B, 410C may be configured to encode a corresponding data stream for optical transmission, e.g. using FEC encoding. The first encryption unit 420 may be configured to encrypt each of the plurality of data streams, as described above with reference to step S501. For example, each of the first encryption sub-units 420A, 420B, 420C of the first encryption unit 420 may be configured to encrypt a corresponding one of the plurality of data streams, e.g. by scrambling the corresponding data stream. The mapping unit 430 may be configured to perform the mapping described with reference to step S502. The second encryption unit 440 may be configured to encrypt each of the plurality of transmission streams, as described above with reference to step S503. For example, each of the second encryption sub-units 440A, 440B, 440C of the second encryption unit 440 may be configured to encrypt a corresponding one of the plurality of transmission streams, e.g. by scrambling the corresponding transmission stream. Each of the plurality of optical transmission units 140A, 140B, 140C may be configured to transmit a corresponding one of the plurality of encrypted transmission streams. Each optical transmission unit 140A, 140B, 140C may be a colored LED (optical diode). The colored LEDs may emit light at mutually different wavelengths, i.e. each colored LED may emit light at a distinct wavelength. The plurality of optical transmission units 140A, 140B, 140C may be comprised by a transmission unit of the transmitter device 400 (not shown in the figure).

The transmission device 400 illustrated in **Fig. 4B** is identical to the transmission device 400 illustrated in **Fig. 4A****,** with the exception that it may additionally comprise a signal processing unit 405 for converting a single data stream provided by a user to a plurality of data streams, in accordance with a number of optical transmission units 140A, 140B, 140C of the transmission device 400. Notably, for N data streams, the data rate of the single data stream is an N-fold of the data rate of each of the plurality of data streams. Thus, the transmission device 400 in **Fig. 4A** may be said to support multi-user communications, while the transmission device of **Fig. 4B** may be said to support single-user communication with an enhanced bandwidth.

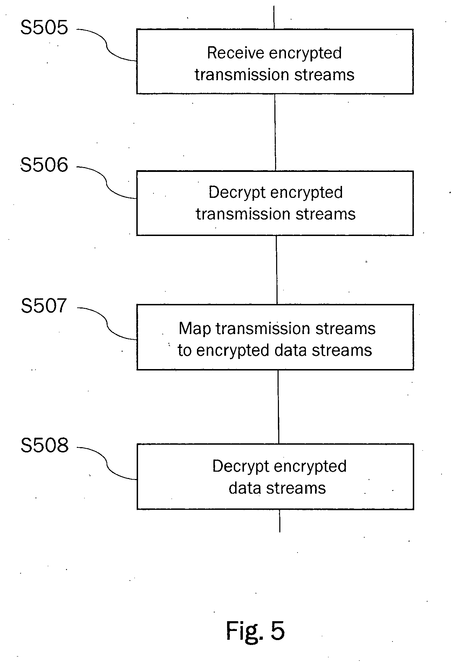

**Fig. 5** is a flow chart schematically illustrating an example of a reception method according to embodiments of the disclosure. Notably, method steps of the reception method may correspond to the inverse of respective method steps of the transmission method described above with reference to **Fig. 3****.**

At step S505, which is a reception step, a plurality of encrypted transmissions streams (corresponding to the encrypted transmission streams transmitted at step S504 in Fig. 3) may be received. Receiving may be performed by a plurality of optical reception units that may be in a one-to-one relationship with the plurality of encrypted transmission streams. The optical reception units may be sensitive to light at mutually different wavelengths, corresponding to the mutually different wavelengths of emission of the optical transmission units. Each optical reception unit may comprise an optical filter (color filter) that permits passage of a specific wavelength or wavelength band only, and a photodetector arranged behind the optical filter with respect to a received optical signal. Each optical filter may correspond to a respective one of the plurality of optical transmission units (e.g. colored LEDs). That is, light emitted by a given optical transmission unit may have a wavelength that lies in the passband of a corresponding optical filter, and lies in the rejection bands of the remaining optical filters. As an outcome of this step, a plurality of encrypted transmission streams are obtained.

At step S506, which is a first decryption step, each of the plurality of encrypted transmission streams may be decrypted. Decryption may be performed in accordance with a first decryption scheme, which may be the inverse of an encryption scheme of the second encryption step S503 described above. That is, the first decryption step may be the inverse of the second encryption step S503 described above. Decrypting each of the plurality of encrypted transmission streams may involve (un-)scrambling each of the plurality of encrypted transmission streams, e.g. by interchanging positions of symbols in each encrypted transmissions stream or by introducing appropriate phase shifts into each encrypted transmission stream. The changes of positions of symbols may be chosen to reverse any changes of positions of the symbols in the second encryption step S503 described above. Likewise, the phase shifts may be chosen to compensate for any phase shifts introduced in scrambling the plurality of transmission streams in the second encryption step S503 described above. Decrypting each of the plurality of encrypted transmission streams may also involve decrypting the respective encrypted transmission stream using an appropriate decryption algorithm. Each encrypted transmission stream may be decrypted individually. As an outcome of this step, a plurality of transmission streams are obtained.

At step S507, which is an (un-)mapping step, the plurality of transmission streams obtained in step S506 may be mapped to a plurality of encrypted data streams. Each transmission stream may be mapped to at least two of the plurality of encrypted data streams. At this step, each encrypted data stream may be obtained as an interleaved sequence of data portions (e.g. blocks) of the plurality of transmission streams. This step may be the inverse of the mapping step S502 described above. For further details on mapping, reference is made to the above description with reference to **Fig. 2B****.** As an outcome of this step, a plurality of encrypted data streams are obtained.

At step S508, which is a second decryption step, each of the plurality of encrypted data streams may be decrypted. Decryption may be performed in accordance with a second decryption scheme, which may be the inverse of an encryption scheme of the first encryption step S501 described above. That is, the second decryption step may be the inverse of the first encryption step S501 described above. Decrypting each of the plurality of encrypted data streams may involve (un-)scrambling each of the plurality of encrypted data streams, e.g. by interchanging positions of symbols in each encrypted data stream or by introducing appropriate phase shifts into each encrypted data stream. The changes of positions of symbols may be chosen to reverse any changes of positions of the symbols in the second encryption step S503 described above. Likewise, the phase shifts may be chosen to compensate for any phase shifts introduced in scrambling the plurality of data streams in the first encryption step S501 described above. Decrypting each of the plurality of encrypted data streams may also involve decrypting the respective encrypted transmission stream using an appropriate decryption algorithm. Each encrypted data stream may be decrypted individually. As an outcome of this step, a plurality of data streams are obtained.

The method may further comprise a decoding step (not shown in **Fig. 5**) at which each of the plurality of data streams obtained in step S508 may be decoded to a respective decoded data stream.

The method may yet further comprise an outputting step (not shown in **Fig. 5**) at which each decoded data stream or each data stream is output.

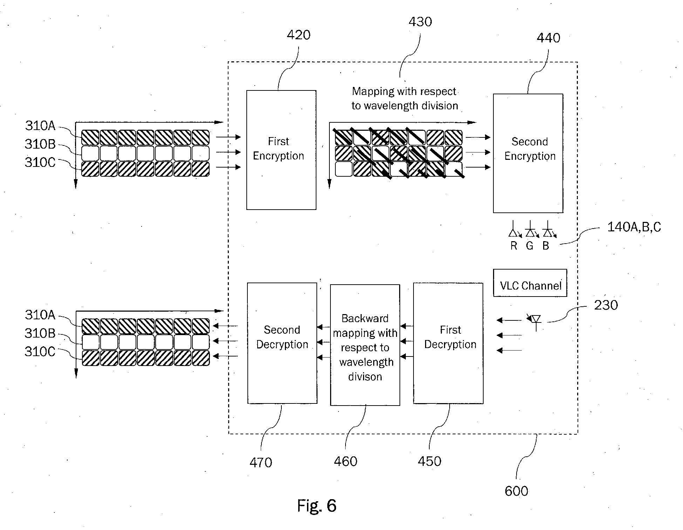

Next, a reception device according to embodiments of the disclosure will be described with reference to **Fig. 6****,** which schematically illustrates an example of an integrated device 600 for transmission and reception. Notably, components of the integrated device 600 relating the reception as described in the next paragraph may be provided as parts of a stand-alone reception device.

Such reception device may comprise a reception unit, a first decryption unit 450, a mapping unit (un-mapping unit) 460, and a second decryption unit 470. The reception unit may comprise a plurality of optical reception units 230, as described above with reference to **Fig. 1** and **Fig. 5****.** The reception unit may be configured to perform the processing of step S505 described above. The first description unit 450 may be configure to perform the processing of step S506 described above. The first decryption unit 450 may comprise a plurality of first decryption sub-units (not shown in the figure), their number being equal to the number of encrypted transmission streams, each being configured to decrypt a corresponding one of the plurality of encrypted transmission streams. The mapping unit 460 may be configured to perform the processing of step S507 described above. The second decryption unit 470 may be configure to perform the processing of step S508 described above. The second decryption unit 470 may comprise a plurality of second decryption sub-units (not shown in the figure), their number being equal to the number of encrypted data streams, each being configured to decrypt a corresponding one of the plurality of encrypted data streams.

The integrated device 600 may further comprise components of the transmission devices described with reference to **Fig. 4A** or **Fig. 4B****,** such as the first encryption unit 420, the mapping unit 430, the second encryption unit 440, and the transmission unit.

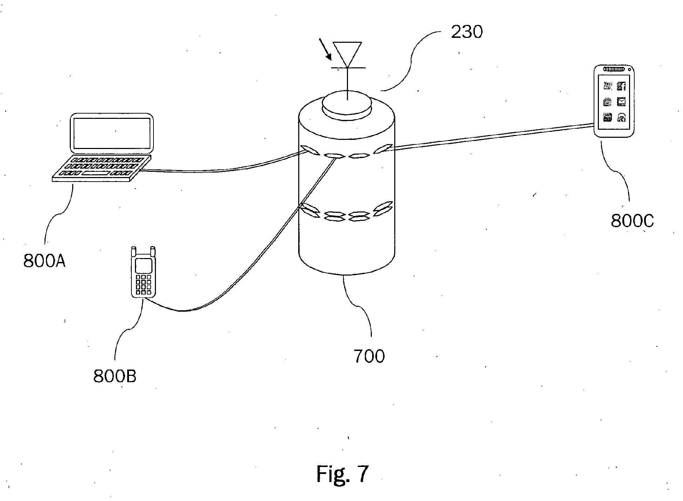

**Fig. 7** schematically illustrates an example of a reception device (centralized reception device) 700 according to embodiments of the disclosure. The reception device 700 may comprise the components relating to reception described with reference to Fig. 6. The reception device may further comprise the components relating to transmission described with reference to **Fig. 4A****,** **Fig. 4B****, or** **Fig. 6****.** The reception device 700 may further comprise connection ports for connecting to one or more user device 800A, 800B, 800C, e.g. via cable. Such cable-connections may employ the USB standard, for example. Each of the user devices 800 may receive an output data stream from the reception device 700. In case that the reception device 700 is provided also with transmission capability, each of the user devices 800 may provide an input data stream to the reception device 700 for subsequent transmission via WDM-VLC.

It should be understood that while the above description is made in terms of VLC, the present disclosure id not limited to communication using visible light, and relates in general to optical communication. Optical communication may proceed e.g. via infrared or ultraviolet light, in addition to visible light.

It should be noted that the apparatus features described above correspond to respective method features that may however not be explicitly described, for reasons of conciseness, and vice versa. The disclosure of the present document is considered to extend also to such method features and apparatus features, respectively.

It should further be noted that the description and drawings merely illustrate the principles of the proposed apparatus. Those skilled in the art will be able to implement various arrangements that, although not explicitly described or shown herein, embody the principles of the disclosure and are included within its spirit and scope. Furthermore, all examples and embodiment outlined in the present document are principally intended expressly to be only for explanatory purposes to help the reader in understanding the principles of the proposed apparatus. Furthermore, all statements herein providing principles, aspects, and embodiments of the disclosure, as well as specific examples thereof, are intended to encompass equivalents thereof.

## Claims

1. A method of transmitting multiple data streams via multiple optical transmission units (140A, 149B, 140C) adapted for optical communication using wavelength division multiplexing, the method comprising:
a first encryption step of encrypting each of a plurality of data streams to obtain a respective encrypted data stream; and
a mapping step of mapping the plurality of encrypted data streams obtained in the first encryption step to a plurality of transmission streams for transmission via the optical transmission units (140A, 149B, 140C), wherein the transmission streams and optical transmission units (140A, 149B, 140C) are in a one-to-one relationship, and wherein each transmission stream is mapped to by at least two of the plurality of encrypted data streams;
a second encryption step of encrypting each of the plurality of transmission streams to obtain a respective encrypted transmission stream; and
a transmission step of transmitting each of the plurality of encrypted transmission streams obtained in the second encryption step via a respective optical transmission unit.

2. The method according to claim 1, wherein in the first encryption step the plurality of data streams are encrypted individually, using a distinct encryption scheme for each data stream.

3. The method according to claim 1 or 2, wherein in the mapping step each transmission stream is obtained as an interleaved sequence of data portions of at least two of the plurality of encrypted data streams.

4. The method according to any one of claims 1 to 3, wherein in the mapping step each of the plurality of encrypted data streams is mapped to each of the plurality of transmission streams.

5. A method of receiving multiple encrypted transmission streams via multiple optical reception units (230) adapted for optical communication using wavelength division multiplexing, the method comprising:
a reception step of receiving a plurality of encrypted transmission streams at a plurality of optical reception units (230), wherein the received encrypted transmission streams and the optical reception units (230) are in a one-to-one relationship;
a first decryption step of decrypting each of the plurality of encrypted transmission streams to obtain a respective transmission stream;
a mapping step of mapping the plurality of transmission streams obtained in the first decryption step to a plurality of encrypted data streams, wherein each transmission stream is mapped to at least two of the plurality of encrypted data streams; and
a second decryption step of decrypting each of the plurality of encrypted data streams to obtain a respective data stream.

6. The method according to claim 5, wherein in the second decryption step the plurality of encrypted data streams are decrypted individually, using a distinct decryption scheme for each encrypted data stream.

7. The method according to claim 5 or 6, wherein in the mapping step each encrypted data stream is obtained as an interleaved sequence of data portions of the plurality of transmission streams, such that for each transmission stream at least two of the plurality of encrypted data streams contain a data portion of the respective transmission stream.

8. A transmission device (400) for transmitting multiple data streams via multiple optical transmission units (140A, 149B, 140C) adapted for optical communication using wavelength division multiplexing, the transmission device (400) comprising:
a first encryption unit (420) for encrypting each of a plurality of data streams to obtain a respective encrypted data stream; and
a mapping unit (430) for mapping the plurality of encrypted data streams obtained by the first encryption unit (420) to a plurality of transmission streams for transmission via the optical transmission units (140A, 149B, 140C),
wherein the transmission streams and optical transmission units (140A, 149B, 140C) are in a one-to-one relationship, and wherein each transmission stream is mapped to by at least two of the plurality of encrypted data streams;
a second encryption unit (440) for encrypting each of the plurality of transmission streams to obtain a respective encrypted transmission stream; and
a transmission unit for transmitting each of the plurality of encrypted transmission streams obtained by the second encryption unit (440), wherein the transmission unit comprises the multiple optical transmission units (140A, 149B, 140C), and each encrypted transmission stream is transmitted via a respective optical transmission unit.

9. The transmission device (400) according to claim 8, wherein the first encryption unit (420) is configured to encrypt the plurality of data streams individually, using a distinct encryption scheme for each data stream.

10. The transmission device (400) according to claim 8 or 9, wherein the mapping unit (430) is configured to generate each transmission stream by sequentially interleaving data portions of at least two of the encrypted data streams.

11. The transmission device (400) according to any one of claims 8 to 10, wherein the optical transmission units (140A, 149B, 140C) are optical diodes emitting light at mutually different wavelengths.

12. A reception device for receiving multiple encrypted transmission streams via a plurality of optical reception units (230) adapted for optical communication using wavelength division multiplexing, the reception device comprising:
a reception unit comprising the plurality of optical reception units (230), for receiving a plurality of encrypted transmission streams at the plurality of optical reception units (230), wherein the encrypted transmission streams and the optical reception units (230) are in a one-to-one relationship;
a first decryption unit (450) for decrypting each of the plurality of encrypted transmission streams to obtain a respective transmission stream;
a mapping unit (460) for mapping the plurality of transmission streams obtained by the first decryption unit (450) to a plurality of encrypted data streams, wherein each encrypted data stream is mapped to by at least two of the plurality of transmission streams; and
a second decryption unit (470) for decrypting each of the plurality of encrypted data streams to obtain a respective data stream.

13. The reception device according to claim 12, wherein the second decryption unit (470) is configured to decrypt the plurality of encrypted data streams individually, using a distinct decryption scheme for each encrypted data stream.

14. The reception device according to claim 12 or 13, wherein the mapping unit (460) is configured to generate each encrypted data stream by sequentially interleaving data portions of the transmission streams, such that for each transmission stream at least two of the plurality of encrypted data streams contain a data portion of the respective transmission stream.

15. The reception device according to any one of claims 12 to 14, wherein each optical reception unit comprises a photodetector and an optical filters, wherein the optical filters of the multiple optical reception unit have mutually different pass bands.

## Patentansprüche

1. Verfahren zum Übertragen mehrerer Datenströme über mehrere optische Übertragungseinheiten (140A, 149B, 140C), ausgelegt für die optische Kommunikation unter Verwenden von Wellenlängen-Multiplex, wobei das Verfahren umfasst:
einen ersten Verschlüsselungsschritt zum Verschlüsseln eines jeden der Vielzahl von Datenströmen zum Erhalten eines entsprechenden verschlüsselten Datenstroms; und
einen Abbildungsschritt zum Abbilden der Vielzahl von verschlüsselten Datenströmen, die in dem ersten Verschlüsselungsschritt erhalten werden, auf eine Vielzahl von Übertragungsströmen für die Übertragung über die optischen Übertragungseinheiten (140A, 149B, 140C), wobei die Übertragungsströme und die optischen Übertragungseinheiten (140A, 149B, 140C) in Eins-zu-Eins-Beziehung zueinander stehen und wobei jeder Übertragungsstrom abgebildet wird durch mindestens zwei der Vielzahl verschlüsselter Datenströme;
einen zweiten Verschlüsselungsschritt für jeden der Vielzahl von Übertragungsströmen zum Erhalten eines entsprechenden verschlüsselten Übertragungsstroms; und
einen Übertragungsschritt zum Übertragen eines jeder der Vielzahl von verschlüsselten Übertragungsströmen, die erhalten wurden in dem zweiten Übertragungsschritt über eine entsprechende optische Übertragungseinheit.

2. Verfahren nach Anspruch 1, wobei in dem ersten Verschlüsselungsschritt die Vielzahl von Datenströmen individuell verschlüsselt wird unter Benutzen eines verschiedenen Verschlüsselungsschemas für jeden der Datenströme.

3. Verfahren nach Anspruch 1 oder 2, wobei in dem Abbildungsschritt jeder verschlüsselte Übertragungsstrom erhalten wird als eine verschränkte Sequenz von Datenanteilen von mindestens zwei der Vielzahl von verschlüsselten Datenströmen.

4. Verfahren nach einem beliebigen der Ansprüche 1 bis 3, wobei in dem Abbildungsschritt jeder der Vielzahl von verschlüsselten Datenströmen abgebildet wird auf jeden der Vielzahl von Übertragungsströmen.

5. Verfahren zum Empfangen mehrerer verschlüsselter Übertragungsströme über mehrere optische Empfangseinheiten (230), ausgelegt für die optische Kommunikation unter Verwenden von Wellenlängen-Multiplex, wobei das Verfahren umfasst:
einen Empfangsschritt zum Empfangen einer Vielzahl von verschlüsselten Übertragungsströmen an einer Vielzahl von optischen Empfangseinheiten (230), wobei die empfangenen verschlüsselten Übertragungsströme und die optischen Empfangseinheiten (230) in Eins-zu-Eins-Beziehung stehen;
einen ersten Entschlüsselungsschritt zum Entschlüsseln eines jeden der Vielzahl von verschlüsselten Übertragungsströmen zum Erhalten eines entsprechenden Übertragungsstroms;
einen Abbildungsschritt zum Abbilden der Vielzahl von Übertragungsströmen, die erhalten worden ist in dem ersten Entschlüsselungsschritt, auf eine Vielzahl von verschlüsselten Datenströmen, wobei jeder Übertragungsstrom abgebildet wird auf mindestens zwei der Vielzahl von verschlüsselten Datenströmen; und
einen zweiten Entschlüsselungsschritt zum Entschlüsseln eines jeden der Vielzahl von verschlüsselten Datenströmen zum Erhalten eines entsprechenden Datenstroms;

6. Verfahren nach Anspruch 5, wobei in dem zweiten Entschlüsselungsschritt die Vielzahl von verschlüsselten Datenströmen individuell entschlüsselt wird unter Benutzen eines verschiedenen Entschlüsselungsschemas für jeden der Datenströme.

7. Verfahren nach Anspruch 5 oder 6, wobei in dem Abbildungsschritt jeder verschlüsselte Datenstrom erhalten wird als eine verschränkte Sequenz von Datenanteilen der Vielzahl von Übertragungsströmen, sodass für jeden Übertragungsstrom mindestens zwei der Vielzahl von verschlüsselten Datenströmen einen Datenanteil des entsprechenden Übertragungsstroms enthalten.

8. Übertragungsvorrichtung (400) zum Übertragen mehrerer Datenströme über mehrere optische Übertragungseinheiten (140A, 149B, 140C), ausgelegt für die optische Kommunikation unter Verwenden von Wellenlängen-Multiplex, wobei die Übertragungsvorrichtung (400) umfasst:
eine erste Verschlüsselungseinheit (420) zum Verschlüsseln jeden einer Vielzahl von Datenströmen zum Erhalten eines entsprechenden verschlüsselten Datenstroms; und
eine Abbildungseinheit (430) zum Abbilden der Vielzahl von verschlüsselten Datenströmen, die erhalten wurden von der ersten Verschlüsselungseinheit (420), auf eine Vielzahl von Übertragungsströmen für die Übertragung über die optischen Übertragungseinheiten (140A, 149B, 140C),
wobei die Übertragungsströme und die optischen Übertragungseinheiten (140A, 149B, 140C) in Eins-zu-Eins-Beziehung stehen, und wobei jeder Übertragungsstrom abgebildet wird durch mindestens zwei der Vielzahl von verschlüsselten Datenströmen;
eine zweite Verschlüsselungseinheit (440) zum Verschlüsseln jedes der Vielzahl von Übertragungsströmen zum Erhalten eines entsprechenden verschlüsselten Übertragungsstroms; und
eine Übertragungseinheit zum Übertragen jedes der Vielzahl von verschlüsselten Übertragungsströmen, die erhalten wurden von der zweiten Verschlüsselungseinheit (440), wobei die Übertragungseinheit umfasst die mehreren optischen Übertragungseinheiten (140A, 149B, 140C) und wobei jeder verschlüsselte Übertragungsstrom übertragen wird über eine entsprechende optische Übertragungseinheit.

9. Übertragungseinheit (400) nach Anspruch 8, wobei die erste Verschlüsselungseinheit (420) konfiguriert ist zum individuellen Verschlüsseln der Vielzahl von Datenströmen unter Verwenden eines verschiedenen Verschlüsselungsschemas für jeden Datenstrom.

10. Übertragungsvorrichtung (400) nach Anspruch 8 oder 9, wobei die Abbildungseinheit (430) konfiguriert ist zum Erzeugen eines jeden Übertragungsstroms durch sequentiell verschränkte Datenanteile von mindestens zwei der verschlüsselten Datenströme.

11. Übertragungsvorrichtung (400) nach einem beliebigen der Ansprüche 8 bis 10, wobei die optischen Übertragungseinheiten (140A, 149B, 140C) optische Lichtdioden gegenseitig verschiedener Wellenlängen sind.

12. Empfangsvorrichtung zum Empfangen mehrerer verschlüsselter Übertragungsströme über eine Vielzahl von optischen Empfangseinheiten (230), ausgelegt für die optische Kommunikation unter Verwenden von Wellenlängen-Multiplex, wobei die Empfangsvorrichtung umfasst:
eine Empfangseinheit, umfassend die Vielzahl von optischen Empfangseinheiten (230) zum Empfangen einer Vielzahl von verschlüsselten Übertragungsströmen an einer Vielzahl von optischen Empfangseinheiten (230), wobei die empfangenen verschlüsselten Übertragungsströme und die optischen Empfangseinheiten (230) in Eins-zu-Eins-Beziehung stehen;
eine erste Entschlüsselungseinheit (450) zum Entschlüsseln eines jeden der Vielzahl von verschlüsselten Übertragungsströmen zum Erhalten eines entsprechenden Übertragungsstroms;
eine Abbildungseinheit (460) zum Abbilden der Vielzahl von Übertragungsströmen, die erhalten worden sind durch die erste Verschlüsselungseinheit (450), auf eine Vielzahl von verschlüsselten Datenströmen, wobei jeder verschlüsselte Datenstrom abgebildet wird durch mindestens zwei der Vielzahl von Übertragungsströmen; und
eine zweite Entschlüsselungseinheit (470) zum Entschlüsseln eines jeden der Vielzahl von verschlüsselten Datenströmen zum Erhalten eines entsprechenden Datenstroms.

13. Empfangseinheit nach Anspruch 12, wobei die zweite Entschlüsselungseinheit (470) konfiguriert ist zum individuellen Entschlüsseln der Vielzahl von verschlüsselten Datenströmen unter Verwenden eines verschiedenen Verschlüsselungsschemas für jeden verschlüsselten Datenstrom.

14. Empfangsvorrichtung nach Anspruch 12 oder 13, wobei die Abbildungseinheit (460) konfiguriert ist zum Erzeugen eines jeden verschlüsselten Datenstroms durch sequentielles Verschränken von Datenanteilen der Übertragungsströme, sodass für jeden Übertragungsstrom mindestens zwei der Vielzahl verschlüsselter Datenströme einen Datenanteil des entsprechenden Übertragungsstroms enthalten.

15. Empfangsvorrichtung nach einem beliebigen der Ansprüche 12 bis 14, wobei jede optische Empfangseinheit einen Fotodetektor und optische Filter umfasst, wobei die optischen Filter der mehreren optischen Empfangseinheiten gegenseitig verschiedene Passbänder aufweisen.

## Revendications

1. Procédé d'émission de multiples flux de données par l'intermédiaire de multiples unités d'émission optique (140A, 149B, 140C) adaptées pour une communication optique à l'aide d'un multiplexage par répartition en longueur d'onde, le procédé comprenant les étapes suivantes :
une première étape de chiffrement consistant à chiffrer chaque flux de données d'une pluralité de flux de données pour obtenir un flux de données chiffré respectif ; et
une étape de mise en correspondance consistant à mettre en correspondance la pluralité de flux de données chiffrés obtenus à la première étape de chiffrement avec une pluralité de flux de transmission destinés à être émis par l'intermédiaire des unités d'émission optique (140A, 149B, 140C), les flux de transmission et les unités d'émission optique (140A, 149B, 140C) étant en relation de correspondance biunivoque, et au moins deux flux de données chiffrés de la pluralité de flux de données chiffrés étant mis en correspondance avec chaque flux de transmission ;
une deuxième étape de chiffrement consistant à chiffrer chaque flux de transmission de la pluralité de flux de transmission pour obtenir un flux de transmission chiffré respectif ; et
une étape d'émission consistant à émettre chaque flux de transmission chiffré de la pluralité de flux de transmission chiffrés obtenus à la deuxième étape de chiffrement par l'intermédiaire d'une unité d'émission respective.

2. Procédé selon la revendication 1, dans lequel à la première étape de chiffrement les flux de données de la pluralité de flux de données sont chiffrés individuellement, à l'aide d'un schéma de chiffrement distinct pour chaque flux de données.

3. Procédé selon la revendication 1 ou 2, dans lequel à l'étape de mise en correspondance chaque flux de transmission est obtenu sous forme d'une séquence entrelacée de parties de données d'au moins deux flux de données chiffrés de la pluralité de flux de données chiffrés.

4. Procédé selon l'une quelconque des revendications 1 à 3, dans lequel à l'étape de mise en correspondance chaque flux de données chiffré de la pluralité de flux de données chiffrés est mis en correspondance avec chaque flux de transmission de la pluralité de flux de transmission.

5. Procédé de réception de multiples flux de transmission chiffrés par l'intermédiaire de multiples unités de réception optique (230) adaptées pour une communication optique à l'aide d'un multiplexage par répartition en longueur d'onde, le procédé comprenant les étapes suivantes :
une étape de réception consistant à recevoir une pluralité de flux de transmission chiffrés sur une pluralité d'unités de réception optique (230), les flux de transmission chiffrés reçus et les unités de réception optique (230) étant en relation de correspondance biunivoque ;
une première étape de déchiffrement consistant à déchiffrer chaque flux de transmission chiffré de la pluralité de flux de transmission chiffrés pour obtenir un flux de transmission respectif ;
une étape de mise en correspondance consistant à mettre en correspondance la pluralité de flux de transmission obtenus à la première étape de déchiffrement avec une pluralité de flux de données chiffrés, chaque flux de transmission étant mis en correspondance avec au moins deux flux de données chiffrés de la pluralité de flux de données chiffrés ; et
une deuxième étape de déchiffrement consistant à déchiffrer chaque flux de données chiffré de la pluralité de flux de données chiffrés pour obtenir un flux de données respectif.

6. Procédé selon la revendication 5, dans lequel à la deuxième étape de déchiffrement les flux de données chiffrés de la pluralité de flux de données chiffrés sont déchiffrés individuellement, à l'aide d'un schéma de déchiffrement pour chaque flux de données chiffré.

7. Procédé selon la revendication 5 ou 6, dans lequel à l'étape de mise en correspondance chaque flux de données chiffré est obtenu sous forme d'une séquence entrelacée de parties de données de la pluralité de flux de transmission, de sorte que pour chaque flux de transmission au moins deux flux de données chiffrés de la pluralité de flux de données chiffrés contiennent une partie de données du flux de transmission respectif.

8. Dispositif d'émission (400) destiné à émettre de multiples flux de données par l'intermédiaire de multiples unités d'émission optique (140A, 149B, 140C) adaptées pour une communication optique à l'aide d'un multiplexage par répartition en longueur d'onde, le dispositif d'émission (400) comprenant :
une première unité de chiffrement (420) destinée à chiffrer chaque flux de données d'une pluralité de flux de données pour obtenir un flux de données chiffré respectif ; et
une unité de mise en correspondance (430) destinée à mettre en correspondance la pluralité de flux de données chiffrés obtenus par la première unité de chiffrement (420) avec une pluralité de flux de transmission destinés à être émis par l'intermédiaire des unités d'émission optique (140A, 149B, 140C),
les flux de transmission et les unités d'émission optique (140A, 149B, 140C) étant en relation de correspondance biunivoque, et au moins deux flux de données chiffrés de la pluralité de flux de données chiffrés étant mis en correspondance avec chaque flux de transmission ;
une deuxième unité de chiffrement (440) destinée à chiffrer chaque flux de transmission de la pluralité de flux de transmission pour obtenir un flux de transmission chiffré respectif ; et
une unité d'émission destinée à émettre chaque flux de transmission chiffré de la pluralité de flux de transmission chiffrés obtenus par la deuxième unité de chiffrement (440), l'unité d'émission comprenant les multiples unités d'émission optique (140A, 149B, 140C), et chaque flux de transmission chiffré étant émis par l'intermédiaire d'une unité d'émission optique respective.

9. Dispositif d'émission (400) selon la revendication 8, dans lequel la première unité de chiffrement (420) est configurée pour chiffrer les flux de données de la pluralité de flux de données individuellement, à l'aide d'un schéma de chiffrement distinct pour chaque flux de données.

10. Dispositif d'émission (400) selon la revendication 8 ou 9, dans lequel l'unité de mise en correspondance (430) est configurée pour générer chaque flux de transmission en entrelaçant séquentiellement des parties de données d'au moins deux des flux de données chiffrés.

11. Dispositif d'émission (400) selon l'une quelconque des revendications 8 à 10, dans lequel les unités d'émission optique (140A, 149B, 140C) sont des diodes optiques émettant de la lumière à des longueurs d'onde mutuellement différentes.

12. Dispositif de réception destiné à recevoir de multiples flux d'émission chiffrés par l'intermédiaire d'une pluralité d'unités de réception optique (230) adaptées pour une communication optique à l'aide d'un multiplexage par répartition en longueur d'onde, le dispositif de réception comprenant :
une unité de réception comprenant la pluralité d'unités de réception optique (230), destinée à recevoir une pluralité de flux de transmission chiffrés sur la pluralité d'unités de réception optique (230), les flux de transmission chiffrés et les unités de réception optique (230) étant en relation de correspondance biunivoque ;
une première unité de déchiffrement (450) destinée à déchiffrer chaque flux de transmission chiffré de la pluralité de flux de transmission chiffrés pour obtenir un flux de transmission respectif ;
une unité de mise en correspondance (460) destinée à mettre en correspondance la pluralité de flux de transmission obtenus par la première unité de déchiffrement (450) avec une pluralité de flux de données chiffrés, au moins deux flux de transmission de la pluralité de flux de transmission étant mis en correspondance avec chaque flux de données chiffré ; et
une deuxième unité de déchiffrement (470) destinée à déchiffrer chaque flux de données chiffré de la pluralité de flux de données chiffrés pour obtenir un flux de données respectif.

13. Dispositif de réception selon la revendication 12, dans lequel la deuxième unité de déchiffrement (470) est configurée pour déchiffrer les flux de données chiffrés de la pluralité de flux de données chiffrés individuellement, à l'aide d'un schéma de déchiffrement distinct pour chaque flux de données chiffré.

14. Dispositif de réception selon la revendication 12 ou 13, dans lequel l'unité de mise en correspondance (460) est configurée pour générer chaque flux de données chiffré en entrelaçant séquentiellement des parties de données des flux de transmission, de sorte que pour chaque flux de transmission au moins deux flux de données chiffrés de la pluralité de flux de données chiffrés contiennent une partie de données du flux de transmission respectif.

15. Dispositif de réception selon l'une quelconque des revendications 12 à 14, dans lequel chaque unité de réception optique comprend un photodétecteur et un filtre optique, les filtres optiques des multiples unités de réception optique ayant des bandes passantes mutuellement différentes.
